# EUROPÄISCHE PATENTSCHRIFT

(11) **EP 0 682 921 B1**
(45) Veröffentlichungstag und Bekanntmachung des Hinweises auf die Patenterteilung: **13.10.1999**
(21) Anmeldenummer: 95107675.1
(22) Anmeldetag: 18.05.1995
(51) Int. Cl.: A61C 1/08

(54) **Ärztliches oder zahnärztliches Handstück**
Medical or dental handpiece
Pièce à main médicale ou dentaire

(30) Priorität: 20.05.1994 DE 4417810
(43) Veröffentlichungstag der Anmeldung: 22.11.1995
(73) Patentinhaber: KALTENBACH & VOIGT GMBH & CO., 88400 Biberach (DE)
(72) Erfinder: Eibofner, Eugen, D-88400 Biberach (DE)
(74) Vertreter: Schmidt-Evers, Jürgen, Dipl.-Ing.

(56) Entgegenhaltungen:
- EP-A- 0 159 453
- DE-C- 90 689
- FR-A- 2 174 399
- US-A- 2 568 708
- US-A- 3 955 284

## Beschreibung

Die Erfindung bezieht sich auf ein ärztliches oder zahnärztliches Handstück mit einer Griffhülse, die sich gerade oder winkelförmig erstreckt und an ihrem vorderen Ende einen Werkzeughalter mit einer Spannvorrichtung für ein quer oder längs der Längsachse des Handstücks angeordnetes Behandlungswerkzeugs aufweist, und an ihrem hinteren Ende durch eine Kupplungsvorrichtung lösbar mit einem Versorgungsteil verbindbar ist, wobei die Griffhülse in ihrem von einer Bedienungshand ergriffenen Griffbereich eine die Griffestigkeit verbessernde Oberflächenstruktur an ihrer Außenmantelfläche aufweist.

Ein Handstück gemäß dem Oberbegriff von Anspruch 1 ist aus der US-A-3 955 284 bekannt.

An ein Handstück der vorliegenden Art sind mehrere Forderungen gestellt. Zum einen soll es von handhabungsfreundlicher Ausgestaltung sein, so daß der Behandler es ohne große Kraftanstrengungen und Aufmerksamkeit leicht ergreifen und bei der Behandlung halten sowie führen kann. Diese Forderung ist von wesentlicher Bedeutung, weil davon die Qualität der Behandlung abhängig ist, deren Güte bei der Behandlung des menschlichen oder tierischen Körpers nachhaltige positive oder negative Folgen haben kann. Dabei soll ein Handstück leicht sein, damit der Behandler es ohne große Kraftanstrengungen zu führen vermag. Aus dem gleichen Grunde soll es auch griffest sein, wozu bereits mehrere Oberflächenstrukturen vorgeschlagen wurden, z.B. kreisringförmig angeordnete Vorsprünge (DE 31 42 534 C2) aneinanderliegende muldenförmige Abflachungen (DE-GM 79 10 126) und in die Oberfläche des Handstücks eingebettete Körner (EP-0 054 653 A2).

Es hat sich in der Praxis gezeigt, daß die Oberflächenstruktur einerseits zwar griffest sein soll, jedoch andererseits eine schonende Wirkung auf die Hand des Behandlers ausüben soll, damit auch nach längerer Behandlungszeit die Haut der Behandlungshand nicht überbeansprucht oder gereizt werden soll, was die Behandlung und auch die Behandlungsqualität beeinträchtigen würde.

Zum anderen handelt es sich bei einem vorliegenden Handstück um ein Produkt, dessen Herstellungskosten gering sein sollen, damit auch die Behandlungskosten niedrig gehalten werden können.

Der Erfindung liegt die Aufgabe zugrunde, ein ärztliches oder zahnärztliches Handstück der vorliegenden Art so auszugestalten, daß die Handhabung bei Gewährleistung einer sicheren Führung leichter durchführbar ist.

Mit der erfindungsgemäßen Ausgestaltung nach Anspruch 1 wird eine Oberflächenstruktur für das Handstück in dessen Griffbereich geschaffen, die bei Vermeidung von Kanten von weicher Struktur ist und somit eine schonende und angenehme Wirkung auf die Hand des Behandlers ausübt, wobei eine gute Griffigkeit erzielt wird, die die angestrebte sichere und leichte Handhabung bei der Behandlung gewährleistet.

In den Unteransprüchen sind Merkmale enthalten, die die Handhabung des Handstücks weiter verbessern, zu einfachen und kostengünstig herstellbaren Bauweisen kleiner Baugröße führen, die Montage bzw. Demontage vereinfachen und außerdem Möglichkeiten eröffnen, durch Variationen des Zusammenbaus ein Handstück mit unterschiedlichen Merkmalen, insbesondere Werkzeugdrehzahlen, zu schaffen.

Nachfolgend werden die Erfindung und weitere durch sie erzielbare Vorteile anhand bevorzugter Ausführungsbeispiele und einer Zeichnung näher erläutert. Es zeigt
- Fig. 1: ein ärztliches oder zahnärztliches Behandlungsinstrument mit einem erfindungsgemäßes Handstück im axialen Schnitt;
- Fig. 2: das Handstück in der Seitenansicht;
- Fig. 3: ein erfindungsgemäßes Handstück im axialen Schnitt in abgewandelter Ausgestaltung;
- Fig. 4: eine Basisform-Darstellung der Griffhülse in der Seitenansicht;
- Fig. 5: die Griffhülse in der Seitenansicht;
- Fig. 6: eine Oberflächenform der Griffhülse im axialen Schnitt und vergrößerter Darstellung;

Das Handstück 1 ist beim vorliegenden Ausführungsbeispiel ein austauschbares Teil eines zahnärztlichen Behandlungsinstruments 2, das das Handstück 1 und ein Versorgungsteil 3 umfaßt, an das das Handstück 1 mit seinem hinteren Ende durch eine Steck/Drehkupplung 4 handhabungsfreundlich und schnell ankuppelbar ist, und das durch eine rückseitige Versorgungsleitung 5 mit einem Versorgungssystem verbindbar ist, das die Antriebsenergie und Behandlungsmedien für das Behandlungsinstrument 2 liefert, die durch in der flexiblen Verbindungsleitung 5 verlaufende Versorgungsleitungen zugeführt werden.

Der Antriebsmotor 6 für ein am vorderen Kopfende des Handstücks 1 in eine Spannvorrichtung 7 einspannbares Behandlungswerkzeug 8, hier ein Bohrer, ist als Elektromotor im Versorgungsteil 3 angeordnet und durch einen sich im Handstück 1 axial erstreckenden und darin drehbar gelagerten Antriebswellenzug 9 mit einer das Werkzeug 8 aufnehmenden Lagerhülse 11 antriebsmäßig verbunden. Das Werkzeug 8 ist quer zur Längsmittelachse des Handstücks 1 in einem Handstückkopf 10 mit der Lagerhülse 11 drehbar gelagert, und es weist somit zur sogenannten Werkzeugseite hin.

Die Steck/Drehkupplung 4 ist durch einen zylindrischen Kupplungszapfen 12 und eine hohlzylindrische Kupplungsausnehmung 13 gebildet, in die dem Kupplungszapfen 12 einsteckbar und in der eingesteckten Position lösbar verrastbar ist, wobei in der verrasteten Stellung die Drehbarkeit des Handstücks 1 auf dem Kupplungszapfen 12 gewährleistet ist. Die überdrückbare Verrastungsvorrichtung 14 ist durch ein in einer Ausnehmung des Kupplungszapfens 12 oder der Kupplungsausnehmung 13 gelagertes durch eine Feder vorgespanntes oder durch eine Feder gebildetes Verrastungselement 15, z.B. ein Federring, gebildet, der in einer entsprechenden ringförmigen Verrastungsnut 16 überdrückbar einzurasten vermag.

Bei der vorliegenden Ausgestaltung ist der Kupplungszapfen 12 am Versorgungsteil 3 angeordnet, von dem er axial vorsteht, während die Kupplungsausnehmung 13 im Handstück 1 angeordnet ist und nach hinten offen ist. Der Antriebswellenzug 9 weist an seinem hinteren Ende ein Steckkupplungsteil 17 auf, das beim axialen Zusammenstecken des Handstücks 1 und des Versorgungsteils 3 selbsttätig mit einem entsprechenden Gegensteckkupplungsteil (nicht dargestellt) am Versorgungsteil 3 kuppelbar ist. Der Kupplungszapfen 12 ist durch eine vorne offene Hülse gebildet, in die beim Zusammenstecken der rückseitige Endbereich des Antriebswellenzugs 9 eingeführt wird, so daß der Kupplungszapfen 12 den sich in der Kupplungsausnehmung 13 erstreckenden Bereich des Antriebswellenzugs 9 übergreift.

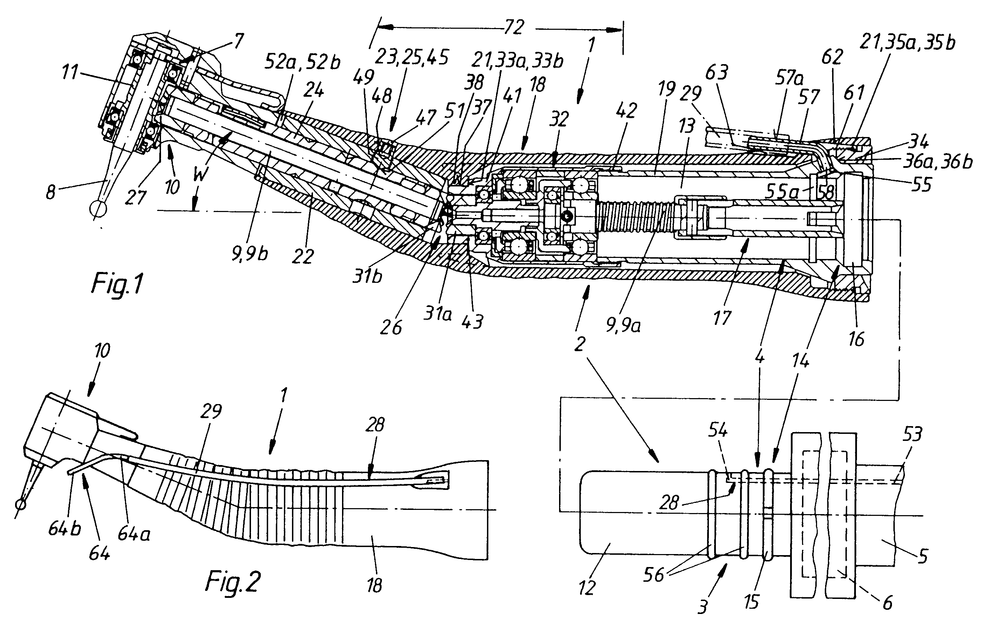

Die Hauptteile des in Form eines sogenannten Winkelstücks geformten Handstücks 1 sind eine Griffhülse 18, deren vorderer Endbereich um einen spitzlen Winkel W von etwa 21° zur dem Werkzeug 8 abgewandten Seite abgewinkelt ist, eine hintere Verstärkungshülse 19 insbesondere aus Metall, die von hinten in die Griffhülse 18 einsetzbar und darin durch eine Fixiervorrichtung 21 fixierbar ist, eine vordere Verstärkungshülse 22 insbesondere aus Metall, die von vorne in ein zylindrisches Loch der Griffhülse 18 einsetzbar und darin durch eine Fixiervorrichtung 23 fixierbar ist, der das Werkzeug 8 aufnehmende und drehbar lagernde Handstückkopf 10, der mit einem rückseitigen zylindrischen Steckkupplungszapfen 24 von vorne in die vordere Verstärkungshülse 22 einsetzbar und darin durch eine Fixiervorrichtung 25 gegen ein unbeabsichtigtes Herausziehen nach vorne und gegen Drehung gesichert ist, der Antriebswellenzug 9, der aus einem hinteren Antriebswellenteil 9a, das sich bis zum Knickpunkt 26 der Griffhülse 18 erstreckt und einem vorderen Antriebswellenteil 9b besteht, das sich vom Knickpunkt 26 im Steckkupplungszapfen 24 bis in den Handstückkopf 10 erstreckt, in dem es durch ein winkelförmiges Zahnradgetriebe 27 mit der Lagerhülse 11 für das Werkzeug 8 antriebsmäßig verbunden ist, und eine Medienleitung 28 für ein Behandlungsmedium, vorzugsweise Wasser, die sich außerhalb der Griffhülse 18 an seiner Mantelfläche in Form eines kleinen flexiblen Schlauches 29 vom hinteren Ende des Handstücks 1 bis zum Handstückkopf 10 erstreckt, in dessen Bereich sie auf die Behandlungsstelle gerichtet ist. Die Antriebswellenteile 9a, 9b sind durch zwei daran gelagerte Kegelräder 31a, 31b im Bereich des Knickpunktes 26 antriebsmäßig miteinander verbunden. In den hinteren Antriebswellenzug 9a kann ein Über- oder Untersetzungsgetriebe 32 integriert sein, das beim Ausführungsbeispiel nach Fig. 1 als Baueinheit mit der hinteren Verstärkungshülse 19 verbunden und somit mit dieser ein- und ausbaubar ist. Der vordere Antriebswellenteil 9b ist in einer axialen Lagerbohrung des Steckkupplungszapfens aufgenommen und gelagert.

Zur Lagerung der hinteren Verstärkungshülse 19 weist die Griffhülse 18 eine Zentrierung und eine Schulterfläche 33a auf, gegen die die hintere Verstärkungshülse 19 mit einer entsprechenden Schulterfläche 33b am Getriebe 32 spannbar ist. Hierzu ist eine Ringmutter 34 vorgesehen, die mit einem Außengewinde 35a in ein am hinteren Ende der Griffhülse 18 angeordnetes Innengewinde 35b einschraubbar ist und mit einer Schulterfläche 36a gegen eine nach hinten gerichtete Schulterfläche 36b an der Verstärkungshülse 19 drückt. Bei der vorliegenden Ausgestaltung sind das Schulterflächenpaar 36a, 36b nach vorne divergente Kegelflächen, die eine Zentrierung für die Verstärkungshülse 19 im hinteren Bereich der Griffhülse 18 bilden. Eine zweite Zentrierung für den vorderen Bereich der hinteren Verstärkungshülse 19 ist im mittleren Bereich der Griffhülse 18 vorgesehen, bei der Ausgestaltung gemäß Fig. 1 unmittelbar hinter dem Knickpunkt 26, und sie wird durch ein koaxiales, zylindrisches Loch 37 im Bereich eines inneren Ringvorsprungs 38 mit der nach hinten weisenden etwa radialen Schulterfläche 33a gebildet. Bei der Ausgestaltung gemäß Fig. 1 ist das Getriebe 32 in einem Innengehäuse 41 als Einheit angeordnet, die mit einem rückseitigen Gewinde 42 mit dem vorderen Ende der hinteren Verstärkungshülse 19 verschraubt ist, vorzugsweise aufgeschraubt ist. Das Innengehäuse 41 weist an seinem vorderen Ende einen zylindrischen Vorsprung 43 auf, der im Loch 37 passend sitzt und somit zentriert ist.

Die Fixiervorrichtung 23 für den Handstückkopf 10 ist durch eine Arretierschraube 45 mit einem insbesondere kegelförmigen Arretieransatz gebildet, die von außen in ein ihren Schraubenkopf 47 passend aufnehmendes zylindrisches Loch 48 und in ein Gewindeloch 49 der vorderen Verstärkungshülse 22 eingeschraubt ist und mit ihrem insbesondere kegelförmigen Arretieransatz in eine entsprechend geformte Kalotte 51 im Steckkupplungszapfen 24 einschraubbar ist. Durch die Anordnung mehrerer, auf den Umfang verteilt angeordneter Kalotten 51 ist es möglich, den Handstückkopf 10 in mehreren wahlweisen aus der dargestellten Stellung verdrehten Drehstellungen zu haltern. Um diese Stellungen leichter finden zu können, ist zwischen dem Handstückkopf 10 und der Griffhülse 18 oder der vorderen Verstärkungshülse 22 ein Rasteingriff mit einer Ausnehmung und einen darin einfassenden Rastvorsprung 52a vorgesehen, der bei der vorliegenden Ausgestaltung rückseitig am Handstückkopf 10 angeordnet ist, wobei jeweils gegenüberliegend Rastausnehmungen 52b in der jeweiligen gewünschten Drehstellung vorgesehen sind. Eine bevorzugte Drehstellung mit einer entsprechenden Kalotte 51 und Rastausnehmung 52b ist bezüglich der Darstellung in Fig. 1 um 180° verdreht vorgesehen.

Die Medienleitung 28 durchsetzt die Steck/Drehkupplung 4 radial in der Weise, daß in jeder Drehstellung der Durchfluß gewährleistet ist. Hierzu mündet ein zunächst achsparalleler und dann sich radial erstreckender Medienkanal 53, 54 an der Mantelfläche des Kupplungszapfens 12, wobei in der hinteren Verstärkungshülse 19 in der gleichen Radialebene ein radialer Medienkanal 55 weiterführt. Die Abdichtung des Spaltes zwischen dem Kupplungszapfen 12 und der Kupplungsausnehmung 13 erfolgt durch zu beiden Seiten der Austritts- bzw. Eintrittsöffnungen angeordnete Dichtungsringe 56, die jeweils in einer Außennut des Kupplungszapfens 12 oder in einer Innennut der Kupplungsausnehmung 13 sitzen können. Um in jeder Drehstellung den Durchfluß zu gewährleisten, ist in der Querebene der Kanalöffnung in der Außenmantelfläche des Kupplungszapfens 12 oder in der Innenmantelfläche der Kupplungsausnehmung 13 eine Ringnut 55a angeordnet. Der Medienkanalabschnitt 55 erstreckt sich bis zu einem in der Verstärkungshülse 19 nach außen mündenden runden Loch 58, in das ein winkelförmiges Anschlußröhrchen 57 fest und dicht eingesetzt, z.B. eingelötet oder eingeklebt ist. Der abgebogene Rohrabschnitt 57a ist etwa achsparallel oder geringfügig nach außen divergent angeordnet, und er durchragt und überragt die Griffhülse 18 in einem Durchführungsloch 61 nach außen und nach vorne. Auf dem äußeren Rohrabschnitt 57a ist der Schlauch 29 aufgesteckt Der Rohrabschnitt 57a durchsetzt die Griffhülse 18 im Bereich einer sich radial erstreckenden Wandung 62, die durch eine stufenförmige Querschnittserweiterung der Griffhülse 18 oder durch eine äußere Ausnehmung 63 in der Griffhülse 18 gebildet sein kann. Die Ausnehmung 63 ist so groß bemessen, daß der Schlauch 29 aufsteckbar ist.

Diese Ausgestaltung ist deshalb von besonderem Vorteil, weil es keiner Abdichtung zwischen dem Anschlußröhrchen 57 und der Griffhülse 18 bedarf. Außerdem bedarf es keiner Befestigung des Anschlußröhrchens 57 an der Griffhülse. Das Anschlußröhrchen 57 wird beim Einbau der hinteren Verstärkungshülse 19 selbsttätig in seine Montagestellung außen an der Griffhülse gebracht, ohne daß es einer nachträglichen Abdichtung bedarf. Dies wird durch die etwa achsparallele Erstreckung des Rohrabschnitts 57a und des Loches 61 ermöglicht.

Das vordere Ende des Schlauches 29 ist auf ein zweites Anschlußröhrchen 64 (Fig. 2) aufgesteckt, das in seitlicher Position am Handstückkopf 10 befestigt, z.B. gelötet oder geklebt ist, und so gebogen ist, daß sein hinterer Rohrabschnitt 64a etwa achsparallel gerichtet ist und sein vorderer Rohrabschnitt 64b auf die Behandlungsstelle gerichtet ist. Aus Handhabungsgründen befindet sich das hintere Anschlußröhrchen 57 in mittlerer Position des oberen rechten oder linken (Rechtshänder) Quadranten in der Blickrichtung von hinten (siehe Fig. 2).

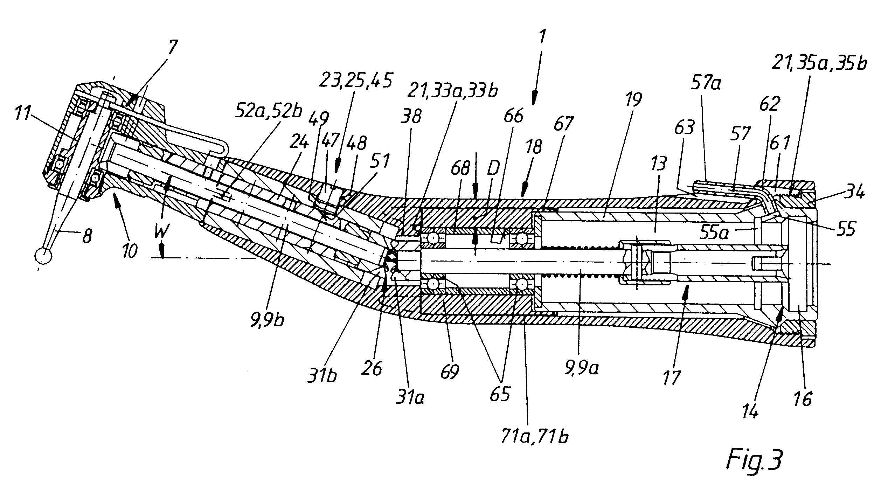

Das Ausführungsbeispiel gemäß Fig. 3, bei dem gleiche oder vergleichbare Teile mit gleichen Bezugszeichen versehen sind, unterscheidet sich von dem vorbeschriebenen Ausführungsbeispiel lediglich durch eine andere Ausbildung und Ausgestaltung der Lagerung des vorderen Endes des hinteren Antriebswellenteils 9a. In solchen Fällen, in denen ein anderes oder gar kein Getriebe 32 vorgesehen werden soll, wie es Fig. 3 zeigt, kommt eine Getriebeeinheit mit unterschiedlich großem Innengehäuse 41 oder kein Getriebe zum Einsatz, sondern lediglich Lagerteile, gemäß Fig. 3 ein oder zwei Wälzlager 65 mit anderen Querschnittsabmessungen. Für solche Fälle ist es möglich, mehrere Griffhülsen 18 vorzusehen, die sich bezüglich der in Fig. 3 mit D bezeichneten Wanddicke unterscheiden und jeweils ein an den Durchmesser der Wälzlager 65 angepaßtes zylindrisches Lagerloch 66 aufweisen. Da bei einer solchen Ausgestaltung ein separates Innengehäuse 41 des ersten Ausführungsbeispiels fehlt, bedarf es einer Zentrierung des vorderen Endes der hinteren Verstärkungshülse 19. Diese Zentrierung kann durch einen zylindrischen Ringansatz 67 in der Griffhülse 18 gebildet sein, in dem der vordere Endbereich der Verstärkungshülse 19 mit Passung sitzt und ggf. eingeschraubt ist (Gewinde 42). Zur axialen Positionierung der Verstärkungshülse 19 dient ebenfalls die Schulterfläche 33a, wobei die Verstärkungshülse 19 durch ein oder zwei der Wälzlager 65 und eine Distanzhülse 69 gegen die Schulterfläche 33a gespannt ist bzw. begrenzt ist.

Vorzugsweise wird jedoch nur ein und dieselbe Griffhülse 18 für vorbeschriebene unterschiedliche Ausführungen verwendet, wobei zur Anpassung der entsprechenden Querschnittsabmessung bzw. zur Lagerung der Wälzlager 65 eine radiale Distanzhülse 69 in die Griffhülse 18 eingesetzt ist, deren Außen-Querschnittsabmessung 71a mit Passung an die Innen-Querschnittsabmessung 71b der Griffhülse 18 angepaßt ist und an der Schulterfläche 33a anliegen und durch geeignete Maßnahmen axial gesichert sein kann. Hierzu kann die Distanzhülse 69 z.B. eingepreßt oder eingeklebt sein oder es kann zur auswechselbaren Befestigung auch ein entsprechendes Innengewinde an der Innenmantelfläche der Griffhülse 18 und ein entsprechendes Außengewinde an der Außenmantelfläche der Distanzhülse 69 angeordnet sein, so daß letztere einschraubbar ist. In diesem Fall ist es vorteilhaft, am hinteren Ende der Distanzhülse 69 Angriffselemente, z.B. Ausnehmungen oder Vorsprünge, anzuordnen, die ein Ein-und Ausschrauben mittels eines geeigneten Werkzeugs gestatten. Dabei ist es vorteilhaft, den Ringansatz 67 einstückig rückseitig an der Distanzhülse 69 anzuordnen. Für unterschiedlich große Getriebe 32 oder Lagerelemente (Wälzlager) können mehrere Distanzhülsen 69 jeweils mit an die Größe angepaßtem Innenquerschnitt vorgesehen sein.

Für ein Handstück 1 ist die Oberflächenform und -beschaffenheit im Griffbereich 72 der Griffhülse 18 von wesentlicher Bedeutung, da davon die Griffestigkeit abhängig ist. Es besteht die Forderung nach einer solchen Oberflächenbeschaffenheit, daß das Handstück stabil und sicher in der Hand des Benutzers liegt bzw. gehalten werden kann und dabei die angreifenden Flächen der Bedienungshand bzw. deren Finger nicht überbeansprucht werden sollen. Dabei ist zu berücksichtigen, daß im Betrieb des Handstücks geringe Vibrationen kaum auszuschließen sind, die die Druckbeanspruchung der Griff-Flächen vergrößertn.

Zur Erfüllung dieser Forderung dienen bei der vorliegenden Ausgestaltung vorzugsweise zwei Maßnahmen, nämlich zum einen eine gewellte Mantelfläche und zum anderen eine leichte Rauhheit der Mantelfläche im Griffbereich 72. Dabei hat auch die Form der Griffhülse 18 einen bedeutenden Einfluß auf ein bequemes und sicheres Halten und Greifen des Handstücks 1.

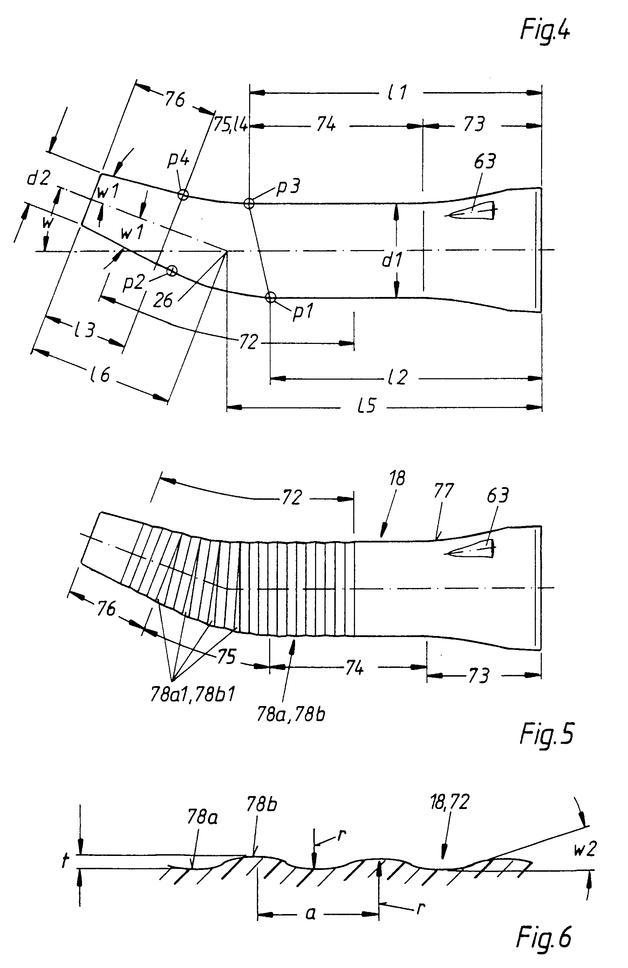

Im folgenden wird die Grundform der Griffhülse 18 im Griffbereich 72 anhand der Fig. 4 beschrieben. Die Griffhülse läßt sich der Reihe nach von hinten nach vorne in vier Formabschnitte 73, 74, 75, 76 aufteilen. Der erste Formabschnitt 73 ist bezüglich des zweiten zylindrischen Formabschnitts 74 nach hinten divergent verdickt, wobei diese Verdickung kegelförmig oder nach hinten zunächst leicht konkav und dann leicht konvex gerundet sein kann, wie es in den Figuren dargestellt ist. Der dritte Formabschnitt 75 befindet sich im Bereich des Knickpunkts 26. Im Bereich dieses Formabschnitts 75 ist die Griffhülse 18 gekrümmt und zugleich nach vorne im Querschnitt verjüngt, wobei das Verhältnis der Querschnittsabmessungen am Anfang und am Ende dieses Formabschnitts 75 etwa 1,2 zu 1 beträgt. Der vierte Formabschnitt 76 ist konzentrisch kegelförmig zum vorderen Ende hin verjüngt, wobei das Verjüngungsverhältnis im Bereich des dritten Formabschnitts 75 und des vierten Formabschnitts 76 etwa gleich ist. Vorzugsweise sind die Anfangspunkte p1 und p2 des dritten und vierten Formabschnitts 75, 76 auf der konvexen Seite der Griffhülse 18 bezüglich den Anfangspunkten p3 und p4 etwas nach hinten versetzt. Der Außendurchmesser d1 der Griffhülse 18 im Bereich des zweiten Formabschnitts 74 beträgt etwa 13 bis 17 mm, insbesondere etwa 15,2 mm. Von dieser Querschnittsabmessung verjüngt sich die Griffhülse 18 auf einen Außendurchmesser d2 von etwa 7 bis 11 mm, insbesondere etwa 9 mm an ihrem vorderen Ende. Die Länge des ersten und zweiten Formabschnitts 73, 74 an der konkaven Seite der Griffhülse 18, siehe l₁, beträgt etwa 35 bis 65 mm, vorzugsweise etwa 47,4 mm und an der konvexen Seite, siehe l₂, etwa 20 bis 55 mm, vorzugsweise etwa 41,3 mm. Die mittlere Länge l₃ des vierten Formabschnitts 76 beträgt etwa 12 bis 20 mm, insbesondere etwa 15 mm. Die Anfangs- und Endpunkte p3, p4 des dritten Formalabschnitts 75 an der konkaven Seite der Griffhülse 18 weisen einen Abstand l₄ voneinander auf, der etwas geringer bemessen ist als die Länge l₃, nämlich etwa 7 bis 13 mm, insbesondere etwa 10 mm. Der Abstand l₅, l₆ des im mittleren Bereich des dritten Formabschnitts 75 angeordneten Knickpunkts 26 vom hinteren bzw. vorderen Ende beträgt etwa 40 bis 70 mm, insbesondere etwa 50,5 mm bzw. etwa 20 bis 30 mm, insbesondere etwa 23,2 mm.

Die konvergente Mantelfläche im vierten Formabschnitt 76 schließt mit der zugehörigen Längsmittelachse einen Winkel w1 von etwa 3° bis 9°, insbesondere etwa 6°2 ein.

Im Griffbereich 72, der im mittleren Bereich des zweiten Formabschnitts 74 beginnt und sich bis zum mittleren Bereich des vierten Formabschnitts 76 erstreckt, ist die Außenmantelfläche 77 der Griffhülse 18 durch in Umfangsrichtung vorzugsweise durchgehend verlaufende Rillen 78a oder Wellen 78b leicht gewellt, die im Querschnitt konkav bzw. konvex gerundet sind und eine sinusförmige Form aufweisen können. Vorzugsweise ist der Radius r der Rillen 78a gleich dem Radius r der Wellen 78b und beträgt etwa 3 bis 5 mm, insbesondere etwa 4 mm. Der axiale Abstand a zwischen zwei benachbarten Rillen oder Wellen beträgt etwa 2 bis 4 mm, vorzugsweise etwa 3,1 mm. Der mittlere Flankenwinkel w2 beträgt etwa 10 bis 30°, insbesondere etwa 21°. Bei Versuchen ist ermittelt worden, daß eine Rillentiefe t von etwa 0,05 bis 0,3 mm, insbesondere etwa 0,15 mm sich vorzüglich eignet.

Die Wellen und Rillen verlaufen vorzugsweise parallel zueinander. Zum Ausgleich der Krümmung können mehrere, z.B. vier Stück zur konvexen Seite keilförmig verbreiterte Ausgleichsrillen bzw. -wellen 78a1, 78b1 vorgesehen sein.

Außerdem sind wenigstens die Wellen 78b im Bereich ihrer Flanken und/oder Wellenkämme, vorzugsweise die Außenmantelfläche 77 im Griffbereich 72 insgesamt, d.h. auch die Wellentäler bzw. Rillen 78a, von geringer Rauhheit, die insbesondere in Verbindung mit der Wellung eine für die Haut der Bedienungshand schonende und dabei griffsichere Halterung in der Bedienungshand ermöglicht. Vorzugsweise ist die Außenmantelfläche 77 auf dem gesamten Längenbereich der Griffhülse 18 entsprechend rauh, wodurch die Griffestigkeit auch beim sonstigen Handhaben des Handstücks 1, wie z.B. beim Ergreifen und Anstecken an das Versorgungsteil 3, verbessert wird. Bei Versuchen hat es sich gezeigt, daß eine Rauhtiefe der Klasse K von etwa 1,5 bis 4 µm, insbesondere etwa 2, 24 µm (siehe VDI 3400 (VDI-Richtlinien) sich vorteilhaft eignet.

Die Griffhülse 18 kann aus korrosionsfestem Metall, insbesondere Edelstahl, Keramik oder vorzugsweise aus Kunststoff bestehen, insbesondere faserverstärktem Kunststoff. Bei den Versuchen ist ebenfalls ermittelt worden, daß sich Polyetheretherketon (PEEK), insbesondere glasfaser- oder kohlenstoffaserverstärkt, sich besonders gut eignet.

Hierdurch werden die bestehenden Forderungen erfüllt, nämlich große Festigkeit (insbesondere Biege- und Zugfestigkeit), Temperaturbeständigkeit, Chemikalienbeständigkeit und Strahlenbeständigkeit, bei geringem Gewicht. Ein sich gut eignendes PEEK-Thermoplast ist unter der Bezeichnung Victrex erhältlich.

Bei solchen Werkstoffen, die durch Formen herstellbar sind, z.B. Metall, Kunststoff und Keramik, besteht eine einfache und kostengünstige Herstellung der Rauhheit darin, diese bei der Herstellung anzuformen und zwar durch eine entsprechende Rauhheit der betreffenden Formflächen der Form. Diese Herstellungsmethode eignet sich insbesondere für faserverstärkte Werkstoffe, insbesondere Kunststoff, da hierdurch die Fasern eingebettet bleiben.

Es ist im Rahmen der Erfindung jedoch auch möglich und vorteilhaft, insbesondere bei metallischen Werkstoffen die Rauheit bzw. Errodierstruktur durch errosive Bearbeitung der Außenmantelfläche 77 zu erzeugen. Hierbei kann es sich um eine elektroerrosive Bearbeitung, Funkenerrosion, Lichtbogenerrosion oder auch ein Errodieren durch nacheinanderfolgendes punktuelles Brennen mittels Lichtstrahlen, insbesondere Laserstrahlen, oder auch Ätzen, handeln.

Die erfindungsgemäße Welligkeit oder Rauhigkeit braucht sich im Rahmen der Erfindung nur auf den Teilflächen des Griffbereichs 72 erstrecken, die von der Bedienungshand kontaktiert werden.

Die vorbeschriebenen Merkmale der Oberflächenstruktur im Griffbereich eignen sich auch für Handstücke, die sich gerade erstrecken.

Die Herstellung der Griffhülse aus Kunststoff ermöglicht es auch, sie in mehreren durchgefärbten Farben herzustellen. Hierdurch lassen sich nicht nur besondere Farbenwünsche des Behandlers berücksichtigen, sondern es ist auch möglich, die Farben zur Kennzeichnung besonderer Ausführungen des Handstücks 1 oder des Instruments 2 zu benutzen, z.B. besonderer Getriebeausführungen (Drehzahlen).

## Patentansprüche

1. a) Ärztliches oder zahnärztliches Handstück (1)
b) mit einer Griffhülse (18),
c) die sich gerade
d) oder winkelförmig erstreckt
e) und an ihrem vorderen Ende einen Werkzeughalter (10) mit einer Spannvorrichtung (7) für ein längs oder quer zur Längsachse des Handstücks (1) angeordnetes Behandlungswerkzeug (8) aufweist,
f) und an ihrem hinteren Ende durch eine Kupplungsvorrichtung (4) lösbar mit einem Versorgungsteil (3) verbindbar ist,
g) - wobei die Griffhülse (18) in ihrem von einer Bedienungshand ergreifbaren Griffbereich (72) eine die Griffestigkeit verbessernde Oberflächenstruktur wenigstens an entsprechenden Teilbereichen ihrer Außenmantelfläche (77) aufweist,
h) - wobei die Oberflächenstruktur durch in Umfangsrichtung verlaufende, einen axialen Abstand (a) voneinander aufweisende, einander abwechselnde Rillen (78a) und Wellen (78b) gebildet ist
i) wobei die Rillen und Wellen im axialen Schnitt konkav und konvex gerundet sind, dadurch gekennzeichnet, daß
j) - der Radius (r) der Rillen (78a) und Wellen (78b) gleich groß ist
k) und etwa 3 bis 5 mm beträgt,
l) - wobei der Abstand (a) zwischen zwei einander benachbarten Rillen (78a) und Wellen (78b) etwa 2 bis 4 mm beträgt,
m) - und wobei die Tiefe der Rillen (78a) etwa 0,05 bis 0,3 mm beträgt.

2. Handstück nach Anspruch 1,
**dadurch gekennzeichnet,**
daß der Radius (r) der Rillen (78a) und Wellen (78b) etwa 4 mm beträgt.

3. Handstück nach Anspruch 1 oder 2,
**dadurch gekennzeichnet,**
daß der Abstand (a) zwischen zwei einander benachbarten Rillen (78a) und Wellen (78b) etwa 3,1 mm beträgt.

4. Handstück nach einem der vorherigen Ansprüche,
**dadurch gekennzeichnet,**
daß die Tiefe der Rillen (78a) etwa 0,15 mm beträgt.

5. Handstück nach einem der vorherigen Ansprüche,
**dadurch gekennzeichnet,**
daß die Außenmantelfläche (77) der Griffhülse (18) im Griffbereich (72) oder insgesamt auf Teilbereichen oder durchgehend eine Rauheit mit einer Rauhtiefe von etwa 1,5 bis 3,5 µm, insbesondere etwa 2,2 µm aufweist.

6. Handstück nach einem der vorherigen Ansprüche,
**dadurch gekennzeichnet,**
daß die Rauhheit angeformt oder errodiert ist, insbesondere feinerrodiert ist.

7. Handstück nach Anspruch 1.
**dadurch gekennzeichnet,**
daß die Griffhülse aus einem in einer Form formbaren Werkstoff besteht, insbesondere Metall, Kunststoff oder Keramik.

8. Handstück nach Anspruch 1,
**dadurch gekennzeichnet,**
daß im hinteren Endbereich und im vorderen Endbereich der Griffhülse (18) Verstärkungshülsen (19, 22) eingesetzt sind, von denen die hintere Verstärkungshülse (19) die zugehörigen Kupplungsteile (16) für die Dreh/Steckkupplung (4) aufweist und in die vordere Verstärkungshülse (22) der Werkzeughalter (10) mit einem Steckkupplungszapfen (24) einsteckbar und durch eine Fixiervorrichtung (25) fixierbar ist.

9. Handstück nach Anspruch 8,
**dadurch gekennzeichnet,**
daß es in seinem mittleren Bereich ein inneres zylindrisches Loch (37; 67) aufweist, in dem der vordere Endbereich der hinteren Hülse (19) ggf. mittels Lage- und/oder Getriebeteilen eingesetzt und zentriert ist.

10. Handstück nach Anspruch 8,
**dadurch gekennzeichnet,**
daß die hintere Hülse (19) durch ein in die Griffhülse (18) einsetzbares und fixierbares Fixierelement, insbesondere einschraubbares Schraubelement (34) gegen eine in der Griffhülse (18) angeordnete und nach hinten weisende Schulterfläche (33a) spannbar ist oder durch diese Schulterfläche axial begrenzt ist.

11. Handstück nach Anspruch 8,
**dadurch gekennzeichnet,**
daß ihm wenigstens eine radiale Distanzhülse (69), insbesondere aus Metall oder Kunststoff zugeordnet ist, die im Bereich des vorderen Endes der Hülse (19) in die Griffhülse (18) mit Passung einsetzbar ist, die mit ihrem freien Innenquerschnitt ein Lagerloch (66) für Getriebe- und/oder Lagerteile (65) einer Antriebswelle (9) bildet.

12. Handstück nach Anspruch 8,
**dadurch gekennzeichnet,**
daß die Fixiervorrichtung (25) für den Werkzeughalter (10) durch ein insbesondere stiftförmiges Fixierelement, insbesondere eine Fixierschraube (45) gebildet ist, die die Griffhülse (18) in einem radialen Loch (48) durchfaßt, in ein Loch (49) der vorderen Hülse (22) von außen eingesetzt oder eingeschraubt ist und einen vorzugsweise kegelförmigen Fixieransatz aufweist, der in eine Fixierausnehmung (51) des Werkzeughalters (10) einfaßt.

## Claims

1. a) Dental or medical handpiece (1)
b) having a grip sleeve (18),
c) which extends straight
d) or angle-shaped
e) and has at its forward end a tool holder (10) having a mounting device (7) for a treatment tool (8) arranged along or transversely to the longitudinal axis of the handpiece (1),
f) and at its rearward end is releasably connectable with a supply part (3) by means of a coupling device (4),
g) the grip sleeve (18) having, in its grip region (72) which can be grasped with an operating hand, a surface structure which improves gripability, at least in appropriate partial regions of its outer surface (77),
h) the surface structure being formed by grooves (78a) and undulations (78b) alternating with one another, running in the circumferential direction, and having a axial spacing (a) from one another,
i) the grooves and undulations being, in axial section, concavely and convexly rounded, characterised in that,
j) the radius (r) of the grooves (78a) and undulations (78b) is the same
k) and is about 3 to 5 mm,
l) the spacing (a) between two grooves (78a) and undulations (78b) neighbouring one another being 2 to 4 mm,
m) and the depth of the grooves (78a) being about 0.05 to 0.3 mm.

2. Handpiece according to claim 1,
characterised in that,
the radius (r) of the grooves (78a) and undulations (78b) is about 4 mm.

3. Handpiece according to claim 1 or 2,
characterised in that,
the spacing (a) between two grooves (78a) and undulations (78b) neighbouring one another is about 3.1 mm.

4. Handpiece according to any preceding claim,
characterised in that,
the depth of the grooves (78a) is about 0.15 mm.

5. Handpiece according to any preceding claim,
characterised in that,
the outer surface (77) of the grip sleeve (18) has, in the grip region (72) or overall on part regions or continuously a surface roughness having a roughness depth of about 1.5 to 3.5 µm, in particular about 2.2 µm.

6. Handpiece according to any preceding claim,
characterised in that,
the roughness is moulded or erroded, in particular fine erroded.

7. Handpiece according to claim 1,
characterised in that,
the grip sleeve is of a material which can be moulded in a mould, in particular metal, plastics or ceramics.

8. Handpiece according to claim 1,
characterised in that,
in the rearward end region and in the forward end region of the grip sleeve (18) reinforcement sleeves (19, 22) are emplaced, of which the rearward reinforcement sleeve (19) has the associated coupling part (16) for the rotation/plug-in coupling (4) and the tool holder (10) can be inserted into the forward reinforcement sleeve (22) with a plug-in coupling pin and can be fixed by means of fixing device (25).

9. Handpiece according to claim 8,
characterised in that,
it has in its middle region an internal cylindrical hole (37; 67) in which the forward end region of the rearward sleeve (19), if appropriate by means of bearing and/or drive parts, is emplaced and centred.

10. Handpiece according to claim 8,
characterised in that,
the rearward sleeve (19) is tensionable against a shoulder surface (33a) arranged in the grip sleeve (18) and directed rearwardly, or is axially bounded by means of this shoulder surface, by means of a fixing element which can be emplaced and fixed in the grip sleeve (18), in particular a screw element (34) which can be screwed in.

11. Handpiece according to claim 8,
characterised in that,
there is associated therewith at least one radial distancing sleeve (69), in particular of metal or plastics, which can be emplaced in the region of the forward end of the sleeve (19) in the grip sleeve (18) with a fit, which distancing sleeve forms with its free inner cross-section a bearing hole (6) for drive and/or bearing parts (65) of a drive shaft (9).

12. Handpiece according to claim 8,
characterised in that,
the fixing device (25) for the tool holder (10) is formed by means of a fixing element, in particular pin-shaped, in particular a fixing screw (45), which penetrates the grip sleeve (18) in a radial hole (48), is emplaced or screwed in from the outside into a hole (49) in the forward sleeve (22), and has a preferably cone-shaped fixing part which engages into a fixing recess (51) of the tool holder (10).

## Revendications

1. a) Pièce à main (1) médicale ou dentaire
b) avec un manchon-poignée (18)
c) qui est rectiligne
d) ou coudé,
e) comporte à son extrémité antérieure un porte-outil (10) avec un dispositif de serrage (7) pour un outil (8) disposé dans la direction de l'axe longitudinal de la pièce à main (1) ou transversalement à celui-ci,
f) et peut être couplé au niveau de son extrémité postérieure à une pièce d'alimentation (3) à l'aide d'un dispositif de couplage (4),
g) - le manchon-poignée (18), dans sa partie poignée (72) qui peut être saisie par la main d'un utilisateur, présentant une structuration de surface améliorant la tenue en main, au moins dans des zones partielles adaptées de sa surface extérieure (77),
h) - la structuration de surface étant formée de sillons (78a) et d'ondes (78b) qui s'étendent dans la direction périphérique, sont espacés les uns des autres d'une distance (a) et alternent les uns avec les autres,
i) - les sillons et les ondes, en coupe axiale, étant arrondis concaves ou convexes, caractérisée par le fait que
j) le rayon (r) des sillons (78a) et des ondes (78b) est identique
k) et est d'environ 3 à 5 mm,
l) - la distance (a) entre deux sillons (78a) et ondes (78b) voisins étant comprise entre environ 2 et 4 mm,
m) - et la profondeur des sillons (78a) et des ondes (78b) étant comprise entre 0,05 et 0,3 mm.

2. Pièce à main selon la revendication 1, caractérisée par le fait que le rayon (r) des sillons (78a) et des ondes (78b) est d'environ 4 mm.

3. Pièce à main selon la revendication 1 ou 2, caractérisée par le fait que la distance (a) entre deux sillons (78a) et ondes (78b) voisins est d'environ 3,1 mm.

4. Pièce à main selon une des revendications précédentes, caractérisée par le fait que la profondeur des sillons (78a) est d'environ 0,15 mm.

5. Pièce à main selon une des revendications précédentes, caractérisée par le fait que la surface extérieure (77) du manchon-poignée (18), dans la partie poignée (72) ou dans des zones partielles ou partout, est rugueuse avec une profondeur de rugosité allant de 1,5 à 3,5 µm, en particulier une rugosité d'environ 2,2 µm.

6. Pièce à main selon une des revendications précédentes, caractérisée par le fait que la rugosité est obtenue par façonnage ou par érosion, en particulier par érosion fine.

7. Pièce à main selon la revendication 1, caractérisée par le fait que le manchon-poignée est réalisé en un matériau façonnable dans un moule, en particulier en métal, en matière plastique ou en céramique.

8. Pièce à main selon la revendication 1, caractérisée par le fait que dans la région d'extrémité postérieure et la région d'extrémité antérieure du manchon-poignée (18) sont montés des manchons de renfort (19, 22), le manchon de renfort postérieur (19) comportant les éléments de couplage (16) concernés pour le couplage par rotation/enfichage (4) et le porte-outil (10) pouvant être enfiché dans le manchon de renfort antérieur (22) par un embout de couplage (24) et pouvant être fixé à l'aide d'un dispositif de fixation (25).

9. Pièce à main selon la revendication 8, caractérisée par le fait qu'elle comporte dans sa région médiane un trou intérieur cylindrique (37, 67) dans lequel la région d'extrémité antérieure du manchon de renfort postérieur (19) peut être montée et centrée le cas échéant à l'aide d'éléments de positionnement et/ou d'éléments de réducteur.

10. Pièce à main selon la revendication 8, caractérisée par le fait que le manchon de renfort postérieur (19) peut être serré au moyen d'un élément de fixation inséré et bloqué dans le manchon-poignée (18), en particulier au moyen d'un élément (14) vissé, contre une surface d'épaulement (33a) aménagée dans le manchon-poignée (18) et tournée vers l'arrière ou est limité axialement par ladite surface d'épaulement.

11. Pièce à main selon la revendication 8, caractérisée par le fait qu'il lui est associé au moins une douille d'espacement (69) radiale, en particulier en métal ou en matière plastique qui peut être montée de manière ajustée dans le manchon-poignée (18), dans la région de l'extrémité antérieure du manchon de renfort (19) et qui avec sa section intérieure libre forme un logement de palier (66) pour des éléments de réducteur et/ou des éléments de palier (65) d'un axe d'entraînement (9).

12. Pièce à main selon la revendication 8, caractérisée par le fait que le dispositif de blocage (25) pour le porte-outil (10) est formé par un élément de blocage notamment en forme de tige, en particulier une vis de blocage (45), qui traverse le manchon-poignée (18) dans un trou radial (48), est inséré ou vissé depuis l'extérieur dans un trou (49) du manchon de renfort antérieur (19) et présente un têton de blocage de préférence conique qui pénètre dans un évidement de blocage (51) du porte-outil (10).
